# EUROPEAN PATENT APPLICATION

(11) **EP 4 733 695 A1**
(43) Date of publication of application: **29.04.2026**
(21) Application number: 25206498.5
(22) Date of filing: 02.10.2025
(51) Int. Cl.: F26B 3/28, F26B 13/00, F26B 13/10, F26B 25/22, H01M 4/04

(54) **ELECTRODE DRYING APPARATUS, ELECTRODE MANUFACTURING EQUIPMENT, AND ELECTRODE DRYING METHOD**

(30) Priority: 24.10.2024 KR 20240146304
(71) Applicant: Samsung SDI Co., Ltd., Yongin-si, Gyeonggi-do 17084 (KR)
(72) Inventor: KIM, Gi Sung, Suwon-si 16678 (KR); KIM, Byoung Kuk, Suwon-si 16678 (KR); PARK, Jae Seong, Suwon-si 16678 (KR); SEO, Won Sub, Suwon-si 16678 (KR); PYO, Young Hak, Suwon-si 16678 (KR); KIM, So Hun, Suwon-si 16678 (KR); LEE, Ga Hyeon, Suwon-si 16678 (KR); LEE, Hae Chan, Suwon-si 16678 (KR); KIM, Dong Hun, Suwon-si 16678 (KR)
(74) Representative: Marks & Clerk LLP

(57) **Abstract**

An electrode drying apparatus, electrode manufacturing equipment, and an electrode drying method are described. The electrode drying apparatus includes a dryer configured to form a dried active material layer by applying thermal energy to dry a fluid active material layer of an electrode active material slurry coated on a substrate moving in a first direction. The apparatus also includes a densitometer configured to measure a density of the fluid active material layer and the dried active material layer, and a controller configured to control the dryer such that a magnitude of the thermal energy is adjusted based on a density variation that is a difference between a density of the fluid active material layer and a density of the dried active material layer as measured by the densitometer.

## Description

### BACKGROUND

### Technical Field

The present disclosure relates to an electrode drying apparatus, electrode manufacturing equipment, and an electrode drying method for manufacturing electrodes for secondary batteries.

### Description of the Related Art

Unlike a primary battery that cannot be recharged, a secondary battery can be recharged and discharged. Low-capacity secondary batteries may be used for portable small-sized electronic devices, such as smartphones, feature phones, notebook computers, digital cameras, and camcorders. High-capacity secondary batteries are widely used as a power source for driving a motor and a power storage battery in hybrid vehicles or electric vehicles. A rechargeable battery includes a positive electrode, a negative electrode, an electrode assembly including the electrodes, a case that accommodates the electrode assembly, electrode terminals connected to the electrode assembly, and the like.

As technology advances, secondary batteries with high capacity are required. Accordingly, a plurality of secondary batteries may be electrically connected and used. For example, the secondary battery may be applied to an electronic device in the form of a secondary battery module including a plurality of secondary batteries, and/or a secondary battery pack including a plurality of secondary battery modules. The secondary battery pack is also configured by a plurality of secondary batteries. In this case, the electronic device including the plurality of secondary batteries requires high power and/or high capacity and may be, for example, an electric vehicle or the like.

Secondary batteries typically include a stack-type electrode assembly in which positive electrodes, separators, and negative electrodes are alternately stacked. The positive electrodes are made by applying a positive electrode active material slurry including a positive electrode active material onto a positive electrode substrate, followed by drying and rolling. Negative electrodes are made by applying a negative electrode active material slurry including a negative electrode active material onto a negative electrode substrate, followed by drying and rolling.

With the recent surge in demand for secondary batteries, there has been research and development aimed at improving productivity of secondary batteries. In the manufacturing of positive and negative electrodes (hereinafter referred to as "electrodes"), a method includes providing a large area per unit length by increasing a width of a substrate.

Despite the improvement in productivity, in order to prevent the deterioration of electrode quality, it is required to uniformly form an active material layer on the entire surface of the substrate, particularly in length and width directions of the substrate. To this end, it is necessary to uniformly apply positive and negative electrode active material slurries (hereinafter referred to as "electrode active material slurry") across the entire surface of the substrate and also to uniformly dry the applied electrode active material slurry across the entire surface. In particular, for wide substrates, it is necessary to ensure drying uniformity of the electrode active material slurry in the length direction (a first direction) and in the width direction (a second direction) of the substrate.

The above information disclosed is merely intended to improve understanding of the background of the present disclosure and may include information that does not form the related or prior art.

### SUMMARY

The present disclosure is directed to providing an electrode drying apparatus, electrode manufacturing equipment, and an electrode drying method capable of improving drying uniformity of an electrode active material slurry coated on a substrate.

The present disclosure is also directed to providing an electrode drying apparatus, electrode manufacturing equipment, and an electrode drying method capable of improving drying uniformity in a width direction of an electrode active material slurry coated on a substrate.

The present disclosure is also directed to providing an electrode drying apparatus, electrode manufacturing equipment, and electrode drying method capable of automatically controlling the degree of drying of an electrode active material slurry coated on a substrate.

However, the problems to be solved by the present disclosure are not limited to the above-mentioned problems, and other problems not mentioned can be clearly understood by those skilled in the art from the following description.

According to an aspect of the present disclosure, there is provided an electrode drying apparatus for manufacturing electrodes, the electrode drying apparatus including a dryer configured to form a dried active material layer by applying thermal energy to dry a fluid active material layer of an electrode active material slurry coated on a substrate moving in a first direction, a densitometer configured to measure a density of the fluid active material layer and the dried active material layer, and a controller configured to control the dryer such that a magnitude of the thermal energy is adjusted based on a density variation that is a difference between the density of the fluid active material layer and the density of the dried active material layer as measured by the densitometer.

According to the aspect of the embodiment, the dryer may include a first drying part configured to first dry the fluid active material layer, and a second drying part configured to second dry the fluid active material layer after the first drying part, and the controller may be configured to control the second drying part to adjust the magnitude of the thermal energy. In this case, the first drying part may be configured to dry an entirety of the fluid active material layer, and the second drying part may be configured to dry the fluid active material layer by dividing the fluid active material layer into sections in a second direction intersecting the first direction. In addition, the densitometer may include a first density measuring part disposed in before the dryer in the first direction and configured to measure a density of the fluid active material layer while scanning in the second direction, and a second density measuring part disposed after the dryer in the first direction and configured to measure a density of the dried active material layer while scanning in the second direction, and the density variation may be a difference between the density of the fluid active material layer and the density f of the dried active material layer or each section in the second direction.

In this case, the second drying part may include a plurality of thermal energy sources that are arranged in the second direction and are individually controlled.

In addition, the controller may individually control the thermal energy sources based on the density variation for each section in the second direction. Further, the density variation for each section may be obtained by dividing the substrate into a plurality of sections in the second direction corresponding to the number of thermal energy sources and calculating the density variation for each section. The number of sections is greater than the number of thermal energy sources. Alternatively, the density variation for each section may be obtained by averaging the density variation for each of the sections.

In addition, the controller may be configured to individually control the thermal energy sources based on a variation in an output of each of the thermal energy sources to correspond to a magnitude of the density variation for each section. Here, the electrode drying apparatus is configured such that the variation in the output of each of the thermal energy sources may differ depending on a type of the electrode active material slurry.

Each of the thermal energy sources may be a diode laser element.

According to another aspect of the present invention, there is provided an electrode drying method including a drying operation of forming a dried active material layer by applying thermal energy to dry a fluid active material layer of an electrode active material slurry coated on a substrate moving in a first direction, a measuring operation of measuring a density of the fluid active material layer and the dried active material layer, and a control operation of adjusting a magnitude of the thermal energy that is applied in the drying operation based on a density variation that is a difference between a density of the fluid active material layer and a density of the dried active material layer.

According to the aspect of the embodiment, the drying operation may include a first drying operation in which the fluid active material layer is first dried, and a second drying operation in which the fluid active material layer that is second dried, and a magnitude of the thermal energy applied in the second drying operation may be controlled. At this time, in the first drying operation, an entirety of the fluid active material layer may be dried, and in the second drying operation, the fluid active material layer may be dried by dividing the fluid active material layer into sections in a second direction intersecting the first direction.

In addition, the measuring operation may include a first measuring operation of measuring a first density while scanning the fluid active material layer in the second direction before the drying operation, and a second measuring operation of measuring a second density while scanning the dried active material layer in the second direction after the drying operation, and the density variation may be a difference between the first density and the second density for each region in the second direction. In this case, in the control operation, the magnitude of the thermal energy applied in the second drying operation may be controlled for each region based on the density variation for each section in the second direction.

In addition, the density variation for each section may be obtained by averaging the density variation for each of the plurality of sections. In addition, in the control operation, the magnitude of the thermal energy applied may be controlled for each section based on a variation in the magnitude of the thermal energy that corresponds to a magnitude of the density variation.

According to still another aspect of the present disclosure, there is provided electrode manufacturing equipment including a coating apparatus configured to apply an electrode active material slurry onto a substrate to form a fluid active material layer, an electrode drying apparatus configured to dry the fluid active material layer on the substrate that moves in a first direction from the coating apparatus to form a dried active material layer, and a rolling apparatus configured to press the substrate on which the dried active material layer is formed to adhere the dried active material layer to the substrate, wherein the electrode drying apparatus may include a dryer configured to form the dried active material layer by applying thermal energy to dry the fluid active material layer, a densitometer configured to measure a density of each of the fluid active material layer and the dried active material layer, and a controller configured to control the dryer such that a magnitude of the thermal energy is adjusted based on a density variation that is a difference between the density of the fluid active material layer and the density of the dried active material layer measured by the densitometer.

At least some of the above and other features of the invention are set out in the claims.

### BRIEF DESCRIPTION OF THE DRAWINGS

The following drawings appended to the present specification are intended to illustrate example embodiments of the present invention, and the scope of the present invention will be more clearly understood from the accompanying drawings together with the following description of the invention, and thus illustrations in the drawings should not be construed as limiting the scope of the present invention, in which:
FIG. 1 is a view of a cylindrical secondary battery according to an embodiment of the present disclosure;
FIG. 2 is a cross-sectional view of a prismatic secondary battery according to an embodiment of the present disclosure;
FIG. 3 is a view of a pouch-type secondary battery according to an embodiment of the present disclosure;
FIG. 4 is a view of the pouch-type secondary battery according to embodiment of the present disclosure;
FIG. 5 is a block diagram of electrode manufacturing equipment;
FIG. 6 is a block diagram of an electrode drying apparatus according to an embodiment of the present disclosure;
FIG. 7 is a diagram illustrating an example of adjusting an amount of thermal energy applied to each section based on a magnitude of a density variation calculated for each section;
FIG. 8 is a table showing the relationship between a magnitude of density variation and variation in thermal energy for each section of second drying part according thereto;
FIG. 9 is a diagram schematically illustrating an example of a method of controlling drying parts for each section based on the difference in density variation for each section; and
FIG. 10 is a flowchart of an electrode drying method according to an embodiment of the present disclosure.

### DETAILED DESCRIPTION

Hereinafter, example embodiments of the present disclosure will be described in detail with reference to the accompanying drawings. The terms or words used in the present specification and claims should not be construed as being limited to ordinary or dictionary meanings and should be construed as meanings and concepts consistent with the technical scope of the present invention based on the principle that an inventor can appropriately define concepts and terms to explain the invention of the inventor in the best way. Therefore, the embodiments described herein and the configuration illustrated in the drawings are only the most preferred some embodiments and are not representative of the full the technical scope of the present invention, and thus, it should be understood that various equivalents and modifications may be made at the time of filing the present application.

Further, when used in the present specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof.

Further, for helping understand the invention, the accompanying drawings may be illustrated not as actual scales. Rather, sizes of some components may be exaggerated. In addition, the same reference numerals may be assigned to the same components in different embodiments.

The description that two objects for comparison are "the same" as each other may denote that they are "substantially the same" as each other. Thus, the range of the expression "substantially the same" may include a case of having a deviation considered as a low degree, for example, a deviation within 5%. In addition, the description that a certain parameter is the same in a certain region may denote that the parameter is the same from an average perspective.

Terms including ordinals such as first and second may be used to describe various components, but, of course, the components are not limited by the terms. These terms are merely used to distinguish one component from another. Unless particularly described as the opposite, a first component may also be a second component.

Throughout the specification, unless particularly described otherwise, each component may be provided in a singular number or a multiple number.

Arrangement of any configuration on an "upper portion (or lower portion)" of a component or "on (or below)" the component may mean not only any configuration may be disposed to be in contact with an upper surface (or lower surface) of the component but also that another configuration may be interposed between the component and any configuration disposed on (or below) the component.

In addition, when it is described that a component is "connected," "coupled," or "accessed" to another component, these components may be directly connected or accessed to each other, but it should be understood that still another component may be "interposed" between these components, or these components are "connected", "coupled" or "accessed" through still another component.

As used herein, the term "and/or" includes any and all combinations of one or more of the associated listed items. Further, when describing embodiments of the present disclosure, the use of "may" means one or more embodiments of the present disclosure. When preceding a list of elements, the terms "one or more" and "at least one" modify the entire list of elements and do not modify the individual elements of the list.

The expression "A and/or B" throughout the specification means A, B, or A and B, unless otherwise differently stated. The expression "C to D" means C or more and D or less, unless otherwise specified.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, and the like may be used herein to describe various elements, components, regions, layers, and/or sections, these elements, components, regions, layers, and/or sections should not be limited by these terms. These terms are used to distinguish one element, component, region, drawing layer, or cross section from another element, component, region, drawing layer, or cross section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the drawings. It will be understood that the spatially relative terms are intended to encompass different orientations of the apparatus in use or operation in addition to the orientation depicted in the figures. For example, when the apparatus in the drawing is turned over, elements described as "below" or "beneath" other elements would then be oriented "above" or "over" the other elements. Thus, the term "below" may encompass both an orientation of above and below.

The terms used in the present specification are intended to describe embodiments of the present disclosure and are not intended to limit the present disclosure.

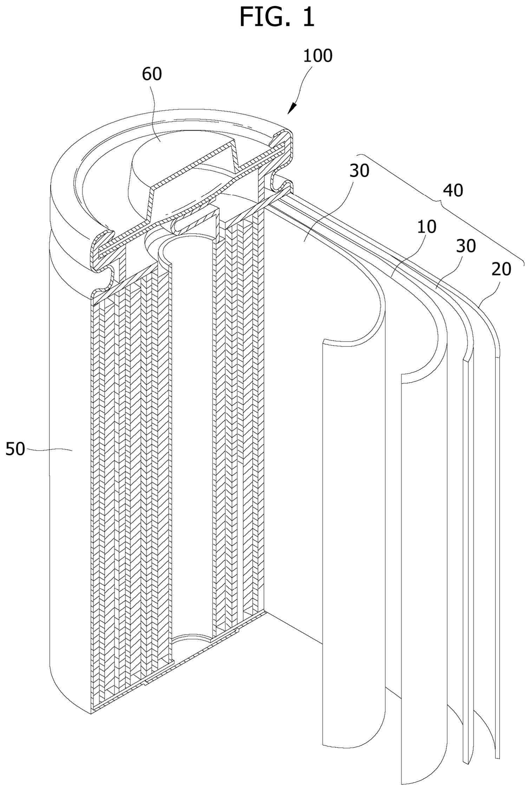

FIGS. 1 to 4 are cross-sectional views of secondary batteries 100 according to embodiments of the present disclosure.

### Secondary battery

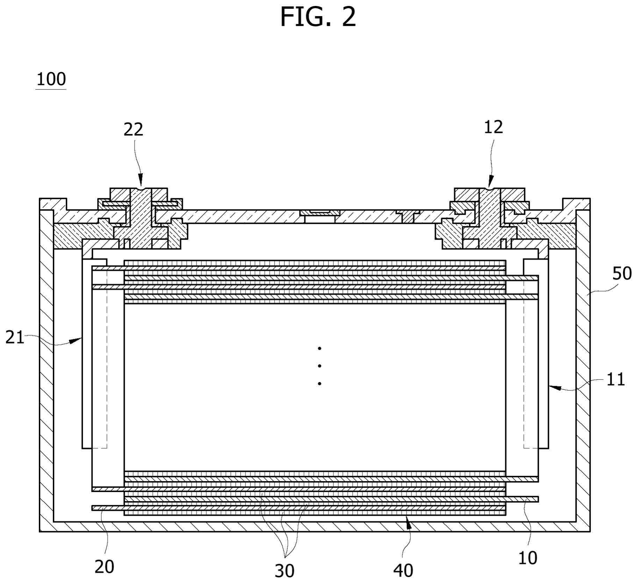

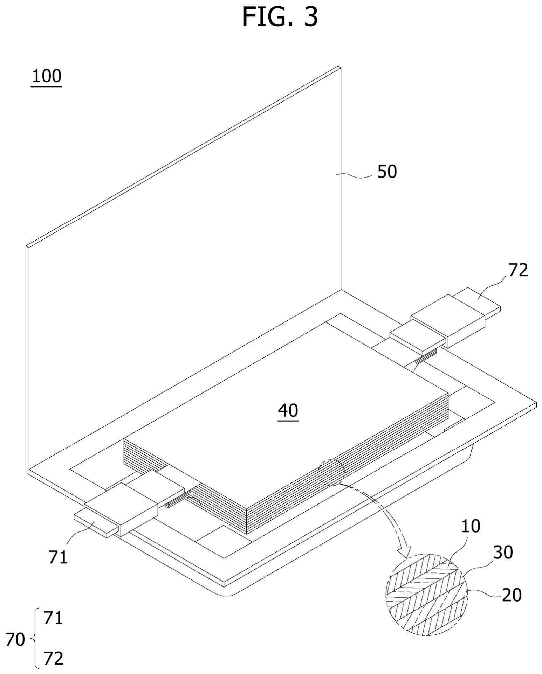

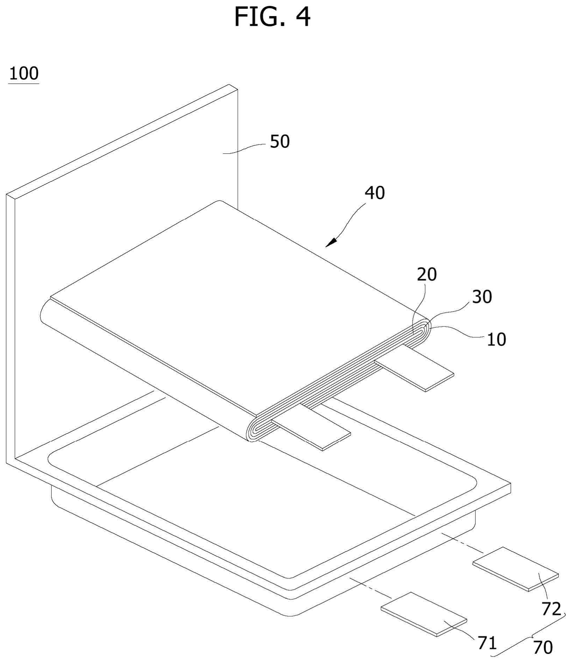

A secondary battery 100 may be described or defined as a cylindrical, prismatic, pouch-type, or coin-type battery, according to its shape. FIGS. 1 to 4 are schematic views each illustrating a secondary battery 100 according to an embodiment. FIG. 1 illustrates a cylindrical secondary battery 100, FIG. 2 illustrates a prismatic secondary battery 100, and FIGS. 3 and 4 each illustrate forms of a pouch-type secondary battery 100. Referring to FIGS. 1 to 4, the secondary battery 100 may include an electrode assembly 40 including a separator 30 interposed between a positive electrode 10 and a negative electrode 20, and a case 50 in which the electrode assembly 40 is accommodated. The positive electrode 10, the negative electrode 20, and the separator 30 may be impregnated with an electrolyte (not shown). As shown in FIG. 1, the secondary battery 100 may include a sealing member 60 that seals the case 50. In addition, in FIG. 2, the secondary battery 100 may include a positive electrode lead tab 11, a positive electrode terminal 12, a negative electrode lead tab 21, and a negative electrode terminal 22. As shown in FIGS. 3 and 4, the secondary battery 100 may include electrode tabs 70, that is, a positive electrode tab 71 and a negative electrode tab 72, which form electrical paths for inducing a current formed in the electrode assembly 40 to outside of the secondary battery 100.

### Positive electrode active material

As the positive electrode active material, a compound (lithiated intercalation compound) that is capable of reversible intercalation and deintercalation of lithium may be used. Specifically, one or more of a composite oxide of lithium and a metal selected from cobalt, manganese, nickel, and a combination thereof may be used.

The composite oxide may be a lithium-transition metal composite oxide, and specific examples thereof may include lithium nickel-based oxide, lithium cobalt-based oxide, lithium manganese-based oxide, lithium iron phosphate-based compound, cobalt-free nickel-manganese-based oxide, or a combination thereof.

As specific example, compounds represented by any one of the following chemical formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}D_{c}(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{b}X_{c}O_{2-α}D_{α}(0.90≤a≤1.8, 0≤b≤0.5, 0≤c≤0.5,0<α<2); LiₐNi_{b}Co_{c}L¹aGₑO₂(0.90≤a≤1.8, 0≤b≤0.9, 0≤c≤0.5,0≤d≤0.5, 0≤e≤0.1); LiₐNiG_{b}O₂(0.90≤a≤1.8, 0.001≤b≤0.1); LiₐCoG_{b}O₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); and LiₐFePO₄(0.90≤a≤1.8). In the these chemical formulas, A is Ni, Co, Mn, or a combination thereof; X is Al, Ni, Co, Mn, Cr, Fe, Mg, Sr, V, a rare-earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

As an example, the positive electrode active material may be a high-nickel-based positive electrode active material having a nickel amount of greater than or equal to 80 mol %, greater than or equal to 85 mol %, greater than or equal to 90 mol %, greater than or equal to 91 mol %, or greater than or equal to 94 mol % and less than or equal to 99 mol % based on 100 mol % of the metal excluding lithium in the lithium-transition metal composite oxide. The high-nickel-based positive electrode active material may be capable of realizing high capacity and can be used in high-capacity and high-density rechargeable batteries.

### Positive electrode

The positive electrode 10 for the secondary battery 100 may include a current collector (substrate) and a positive electrode active material layer formed on the positive electrode current collector. The positive electrode active material layer includes a positive electrode active material and may further include a binder and/or a conductive material. The positive electrode 10 may further include an additive that serves as a sacrificial positive electrode.

An amount of the positive electrode active material may range from 90 wt% to 99.5 wt% based on 100 wt% of the positive electrode active material layer, and an amount of each of the binder and the conductive material may range from 0.5 wt% to 5 wt% based on 100 wt% of the positive electrode active material layer.

The binder serves to adhere positive electrode active material particles to each other and also to adhere the positive electrode active material to the current collector. Representative examples of the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, or the like. But the present disclosure is not limited to these examples.

The conductive material is used to provide conductivity to the electrode 10, and any material that does not cause a chemical change in the battery and is electrically conductive may be used in the configured battery. Examples of the conductive material include a carbon-based material such as natural graphite, artificial graphite, carbon black, acetylene black, Ketjen black, carbon fibers, carbon nanofibers, or carbon nanotubes; a metal-based material in the form of a metal powder or metal fiber including copper, nickel, aluminum, silver, or the like; a conductive polymer such as a polyphenylene derivative; or a mixture thereof.

Aluminum may be used as the current collector, but the present disclosure is not limited thereto.

### Negative electrode active material

The negative electrode active material includes a material that can reversibly intercalate/deintercalate lithium ions, a lithium metal, a lithium metal alloy, a material capable of doping and dedoping lithium, or a transition metal oxide. The material capable of reversible intercalation and deintercalation of lithium ions is a carbon-based negative electrode active material, and may include, for example, crystalline carbon, amorphous carbon, or a combination thereof. Examples of the crystalline carbon may include graphite such as amorphous, plate shape, flake, spherical shape or fibrous natural graphite or artificial graphite. Examples of the amorphous carbon may include soft carbon or hard carbon, a mesophase pitch carbonized product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x<2), a Si-Q alloy, or a combination thereof. In the formula Si-Q, Q is selected from an alkali metal, an alkaline-earth metal, a Group 13 element, a Group 14 element (excluding Si), a Group 15 element, a Group 16 element, a transition metal, a rare-earth element, and a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite is in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

### Negative electrode

The negative electrode 20 for the secondary battery 100 includes a negative electrode current collector (substrate) and a negative electrode active material layer positioned on the negative electrode current collector. The negative electrode active material layer includes a negative electrode active material and may further include a binder and/or a conductive material.

The negative electrode active material layer may include, for example, 90 wt% to 99 wt% of the negative electrode active material, 0.5 wt% to 5 wt% of the binder, and 0 wt% to 5 wt% of the conductive material.

The binder serves to adhere negative electrode active material particles to each other and also to adhere the negative electrode active material to the current collector. A non-aqueous binder, an aqueous binder, a dry binder, or a combination thereof may be used as the binder.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity can be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

A dry binder is a polymer material capable of being fiberized. The dry binder may be, for example, polytetrafluoroethylene, polyvinylidene fluoride, a polyvinylidene fluoride-hexafluoropropylene copolymer, a polyethylene oxide, or a combination thereof.

The conductive material is used to provide conductivity to the electrode 20, and any material that does not cause a chemical change in a battery and is electrically conductive may be used. Specific examples of the conductive material may include a carbon-based material such as natural graphite, artificial graphite, carbon black, acetylene black, Ketjen black, carbon fibers, or carbon nanofibers; a metal-based material in the form of a metal powder or metal fiber including copper, nickel, aluminum, silver, or the like; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

### Electrolyte

The **electrolyte (not shown)** for the secondary battery 100 includes a non-aqueous organic solvent and a lithium salt.

The non-aqueous organic solvent serves as a medium through which ions taking part in the electrochemical reaction of a battery can move.

The non-aqueous organic solvent may comprises a carbonate-based solvent, an ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone and the like. The alcohol-based solvent may include ethyl alcohol, isopropyl alcohol, and the like, and the aprotic solvent may include nitriles such as R-CN (where R is a C2 to C20 linear, branched, or cyclic hydrocarbon group and includes a double bond, an aromatic ring, or an ether bond), and the like; amides such as dimethyl formamide; dioxolanes such as 1,3-dioxolane and 1,4-dioxolane; sulfolanes; and the like.

The non-aqueous organic solvents may be used alone or in combination of two or more.

In addition, when the carbonate-based solvent is used, a cyclic carbonate and a chain carbonate may be mixed and used, and the cyclic carbonate and the chain carbonate may be mixed in a volume ratio of 1:1 to 1:9.

The lithium salt is a material that is dissolved in the organic solvent and serves as a source of lithium ions in a battery, enables a basic operation of a rechargeable battery, and improves the movement of the lithium ions between positive and negative electrodes. Representative examples of the lithium salt may include one or two or more selected from among LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide LiC₄F₉SO₃, LiN(CₓF₂ₓ₊₁SO₂)(C_{y}F_{2y+1}SO₂) (where, x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator

Depending on the type of the secondary battery 100, the separator 30 may be present between the positive electrode 10 and the negative electrode 20. The separator 30 may include polyethylene, polypropylene, polyvinylidene fluoride, or a multilayer film of two or more layers thereof, and of course, may also include a mixed multilayer film such as a polyethylene/polypropylene two-layer separator, a polyethylene/polypropylene/polyethylene three-layer separator, a polypropylene/polyethylene/polypropylene three-layer separator, or the like.

The separator 30 may include a porous substrate and a coating layer including an organic material, an inorganic material, or a combination thereof positioned on one surface or both surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, TEFLON^{®}, and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof. But the present disclosure is not limited to these examples.

The organic and inorganic materials may be present by being mixed in a single coating layer/. In other embodiments, the organic and inorganic materials may be present in a form in which a coating layer including organic materials and a coating layer including inorganic materials, with the two coating layers being stacked.

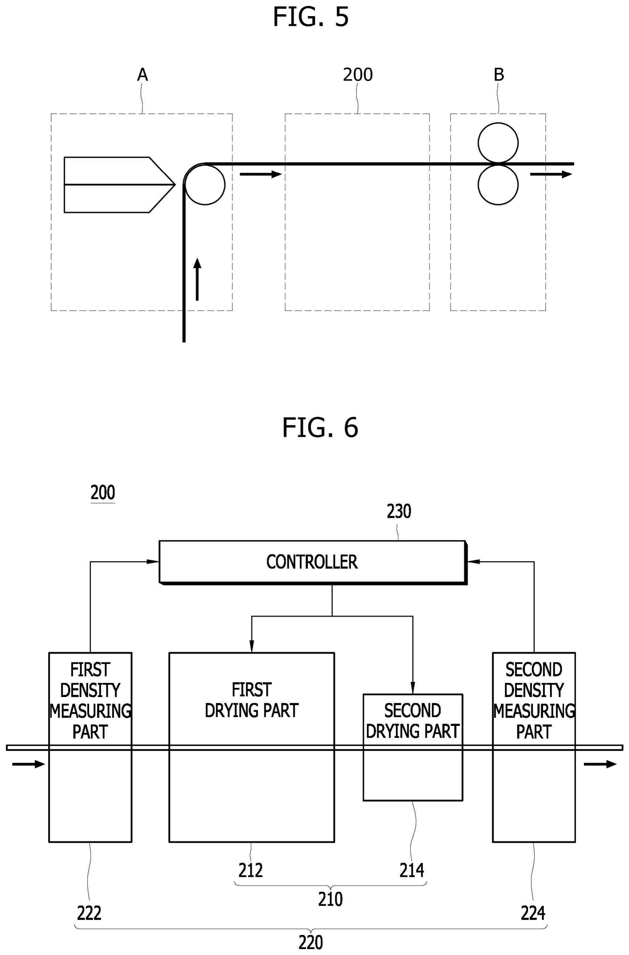

FIG. 5 is a block diagram illustrating an example electrode manufacturing equipment. The electrode manufacturing equipment shown in FIG. 5 may, for example, be equipment for applying an electrode active material slurry onto a substrate (an electrode current collector) to form an active material layer (a first active material layer) in a slurry state, drying the electrode active material slurry by applying thermal energy to the first active material layer to form an active material layer (a second active material layer) in a dried state, and then rolling the substrate with the second active material layer. Referring to FIG. 5, the electrode manufacturing equipment includes a coating apparatus A, an electrode drying apparatus 200, and a rolling apparatus B.

The coating apparatus A is an apparatus for forming the first active material layer by applying the electrode active material slurry on the substrate. The electrode active material slurry may be prepared by mixing a powder mixture, which includes a conductive material and/or a binder along with an electrode active material, with a predetermined solvent. The coating apparatus A may be a die coater configured to coat the electrode active material slurry on the substrate. But the present disclosure is not limited thereto, and the type, form, and configuration of the die coater may be implemented in various ways.

The electrode drying apparatus 200 is for drying the first active material layer coated on the substrate to form the second active material layer. To this end, the electrode drying apparatus 200 may include a dryer configured to form the second (dried) active material layer by applying thermal energy to the first (fluid) active material layer to evaporate the solvent included in the electrode active material slurry. In addition, the electrode drying apparatus 200 may further include a densitometer configured to measure densities of the first (fluid) active material layer and the second (dried) active material layer, so as to determine a density variation therebetween. In addition, the electrode drying apparatus 200 may further include a controller 230 configured to control a magnitude of thermal energy applied to the first (fluid) active material layer based on the measured density variation. The specific configuration of the electrode drying apparatus 200 will be described later.

The rolling apparatus B may be for completely adhering the second active material layer formed on the substrate to the substrate. For example, the rolling apparatus B may apply a predetermined pressure to the substrate in a thickness direction to ensure that the second active material layer is completely adhered to the substrate. The rolling apparatus B may be, for example, a roller. But the present disclosure is not limited thereto, and the type, form, and configuration thereof may be implemented in various ways.

FIG. 6 is a block diagram illustrating a schematic configuration of the electrode drying apparatus 200 according to an embodiment of the present disclosure. Referring to FIG. 6, the electrode drying apparatus 200 includes a dryer 210, a densitometer 220, and a controller 230.

The dryer 210 applies thermal energy to the electrode active material slurry (the first/fluid active material layer) coated on the substrate, which is an electrode current collector, to evaporate a solvent component. As a result, the dryer 210 facilitates the formation of an electrode active material layer (the second/dried active material layer) in which the solvent component is evaporated from the first/fluid active material layer.

To this end, the dryer 210 may be located behind the coating apparatus A (see FIG. 5) and may be configured to move the substrate in a first direction (from left to right in FIG. 6). That is, the substrate coated with the first active material layer enters the dryer 210 from the left side, and as the substrate passes through the dryer 210 in the first direction, the first/fluid active material layer is dried to become the second/dried active material layer. The substrate with the second/dried active material layer formed thereon exits toward the opposite side, i.e., the right side.

According to an aspect of the present embodiment, the dryer 210 may adjust the amount of thermal energy applied to dry the first active material layer. More specifically, the dryer 210 may vary the amount of thermal energy applied to the first active material layer under the control of the controller 230. The dryer 210, under the control of the controller 230, may apply different amounts of thermal energy to respective sections in a width direction of the substrate, i.e., a second direction intersecting the first direction in which the substrate moves.

According to an aspect of the present embodiment, the dryer 210 may include a first drying part 212 and a second drying part 214. In FIG. 6, the dryer 210 is illustrated as including the two drying parts 212, 214. But in other embodiments, the dryer 210 may include three or more drying parts. In this case, one or more drying parts, i.e., the second drying parts 214, may be provided to dry the respective sections in the second direction.

The first drying part 212 primarily dries the first/fluid active material layer formed on the substrate that enters the dryer 210. The first drying part 212 dries the first active material layer entirely. To this end, the first drying part 212 may be implemented in the form of a drying furnace or a drying oven. The first drying part 212 may have a configuration to dry the first active material layer formed on the substrate to a significant degree (e.g., 95% or more) or nearly completely as the substrate passes therethrough, and may be controlled by the controller 230 to correspond to such a configuration. Thus, the first drying part 212 may have a configuration to prevent the first active material layer from being completely dried or overdried and may be controlled by the controller 230 to correspond to such a configuration.

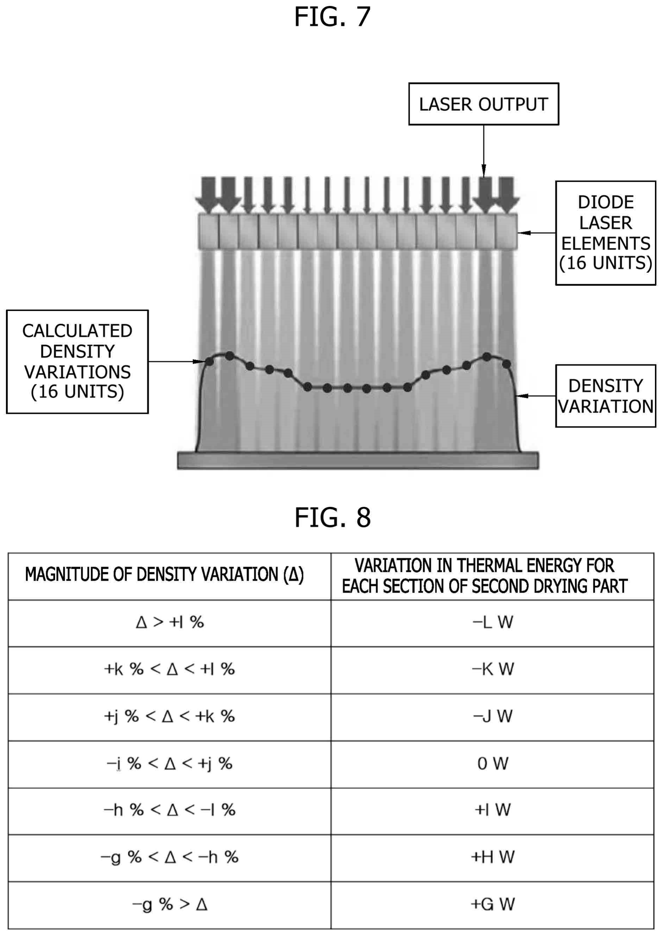

The second drying part 214 is disposed after the first drying part 212 to further dry the first active material layer that was primarily dried by the first drying part 212. The second drying part 214 may divide the first active material layer into a plurality of sections and independently dry each section. In particular, as shown in FIG. 7, the second drying part 214 may divide the first active material layer into the plurality of sections in the width direction of the substrate (in the second direction) and independently dry each section. Accordingly, the second drying part 214 may vary the degree of drying of the first active material layer for each section in the second direction.

To this end, the second drying part 214 may include a plurality of thermal energy sources having outputs that can be individually controlled. Here, thermal energy source may be an apparatus capable of locally applying thermal energy, such as a diode laser element, but the present disclosure is not limited thereto. In this case, multiple diode laser elements may be disposed at intervals in the second direction. In addition, the diode laser elements may be disposed in a row in the second direction. However, the present disclosure is not limited to such an arrangement, and the plurality of diode laser elements may be disposed, for example, in two or more rows.

By dividing and configuring the dryer 210 into a plurality of drying parts 212, 214, one of the plurality of drying parts, i.e., the first drying part 212, may be configured to dry the entire first active material layer at once, thereby reducing the time required for the drying process. In addition, another one of the plurality of drying parts, i.e., the second drying part 214, may be configured to dry the first active material layer differently for each section in the second direction. Thus, differences in the degree of drying by section, which may occur during the drying process by the first drying part 212, can be compensated for by the second drying part 214. For example, in sections that are relatively less dried during the drying process by the first drying part 212, more thermal energy may be applied by the second drying part 214. And in sections that are relatively more dried, less thermal energy may be applied by the second drying part 214, thereby ensuring overall uniform drying.

The densitometer 220 measures the density of the active/fluid active material layer (the first active material layer) on the substrate before entering the dryer 210 and measures the density of the active/dried active material layer (the second active material layer) on the substrate exiting from the dryer 210. To this end, the densitometer 220 may include a first density measuring part 222 disposed in front of the dryer 210 and configured to measure the density of the first active material layer, and a second density measuring part 224 disposed after the dryer 210 and configured to measure the density of the second active material layer.

The first and second density measuring parts 222, 224 may each include a measuring device that calculates density by measuring (in a non-contact manner) a thickness of the active material layer formed on the surface of the substrate. For example, the measuring device may measure a mass per unit area (a loading level (L/L)) of the active material layer as a density. To this end, each of the first and second density measuring parts 222, 224 may measure the loading level (L/L) of the active material layer by irradiating a side of the substrate on which the active material layer is formed with light (e.g., X-rays or beta rays) of a predetermined intensity and measuring an intensity of the light received from the opposite side of the substrate. However, the present embodiment is not limited to such a configuration, and the first and second density measuring parts 222, 224 may determine the density using another measurement other than the loading level (L/L).

The first density measuring part 222 and the second density measuring part 224 may calculate the density of the active material layer at the same position on the substrate with respect to a moving direction of the substrate (the first direction). In this regard, the first density measuring part 222 and the second density measuring part 224 may sequentially measure the density of the active material layer with a time interval Δt required for the substrate to pass through the dryer 210. For example, when the first density measuring part 222 measures the density of the first active material layer at time t1, the second density measuring part 224 may measure the density of the second active material layer at time t2, that is, at time (t1+Δt). Here, the time interval Δt may be determined using a speed at which the substrate moves in the first direction and a length of the dryer 210 or a distance between the first density measuring part 222 and the second density measuring part 224.

The first density measuring part 222 and the second density measuring part 224 may each measure the density of the active material layer while scanning the substrate in the second direction that intersects the first direction, i.e., the width direction of the substrate. The first density measuring part 222 and the second density measuring part 224 may each include a measuring device including high-performance sensors and scanners, such as the MXproLine^{™} made by Honeywell International Inc. But the present disclosure is not limited to such a device.

The first density measuring part 222 and the second density measuring part 224 may each continuously measure the density of the active material layer in the second direction. Alternatively, the first density measuring part 222 and the second density measuring part 224 may also measure the density of the active material layer at multiple points in the second direction at a predetermined measurement interval. Here, the measurement interval in the second direction may correspond to an interval of the plurality of thermal energy sources provided in the second direction in the second drying part 214. For example, the measurement interval of the first and second density measuring parts 222, 224 and the interval of the plurality of thermal energy sources may have a ratio of 1:1, 2:1, or 3:1, and the like.

Measured values from each of the first density measuring part 222 and the second density measuring part 224 may be transmitted to the controller 230. The measured values may include density data measured by each of the first density measuring part 222 and the second density measuring part 224, for example, the loading level (L/L). However, the present disclosure is not limited only thereto, and the measured values may also include other measurement data that may be used by the controller 230 to determine the density of the active material layer. The controller 230, which has received the density data from the first and second density measuring parts 222, 224, may calculate a density variation using differences in the received density data.

The density variation calculated by the controller 230 may be a density variation for each section. That is, the controller 230 may calculate the density variation for each of the plurality of sections divided at a predetermined interval in the second direction. When the density variation calculated in a specific section has continuous values or a plurality of values, the controller 230 may determine the density variation for that section by calculating the arithmetic mean of these values.

According to one aspect of the present embodiment, the number of sections for which the density variation is calculated by the controller 230 may correspond to the number of thermal energy sources included in the second drying part 214. When the number of sections for which the density variations is calculated by the controller 230 corresponds in a 1:1 ratio to the number of thermal energy sources, the controller 230 can efficiently control the degree of drying of the second drying part 214 by thermal energy sources included in the second drying part 214.

FIG. 7 is a diagram showing an example of adjusting the amount of thermal energy applied to each section based on a magnitude of the density variation calculated for each section. Referring to FIG. 7, the density variation in the second direction has continuous values. But, the controller 230 calculates the density variation in 16 sections corresponding to the number of thermal energy sources (e.g., diode laser elements 1 to 16) arranged in the second direction in the second drying part 214. Thus, the controller 230 may adjust the amount of thermal energy (laser output) applied to each section by controlling the thermal energy source at each corresponding position based on the calculated density variation for each section.

According to one aspect of the present embodiment, the controller 230 may adjust the amount of thermal energy that is applied to the active material layer by the dryer 210 based on the calculated density variation for each section. In this case, the controller 230 may control the dryer 210 so that a predetermined magnitude of thermal energy corresponding to a magnitude of the density variation is applied. Here, a variation in the amount of thermal energy applied in response to the density variation may be an amount necessary to achieve optimal drying by the dryer 210, which may be determined in advance through repeated experiments or historical data. In addition, the variation in the amount of thermal energy corresponding to the density variation may vary depending on the composition or amount of the electrode active material slurry forming the active material layer, the type of solvent, and the like.

In addition or in alternative, the controller 230 may adjust the amount of thermal energy applied to the active material layer by the dryer 210 based on a comparison (hereinafter referred to as "difference in density variation") of the calculated density variation for each section with a predetermined reference value. In this case, the controller 230 may control the dryer 210 to apply more thermal energy when the density variation is less than the predetermined reference value, that is, when the difference in density variation is negative. Conversely, the controller 230 may control the dryer 210 to apply less thermal energy when the density variation is greater than the predetermined reference value, that is, when the difference in density variation is positive. Here, the predetermined reference value is a density variation obtainable during optimal drying by the dryer 210 and may be determined through repeated experiments or historical data. In addition, the variation in the amount of thermal energy applied in response to the difference in density variation may be determined through repeated experiments or historical data.

In some cases, the variation in the amount of thermal energy applied in response to the difference in density variation may vary depending on the composition or amount of the electrode active material slurry forming the active material layer, the type of solvent, and the like. This is because the amount of thermal energy required to dry the same amount of solvent can vary depending on the composition of the electrode active material slurry, the type of solvent, and the like.

According to an aspect of the present embodiment, the density variation or its difference and the variation in the amount of thermal energy applied in response thereto may have a correspondence. For example, the density variation or its difference and the variation in the amount of thermal energy may have a predetermined functional relationship (e.g., a linear function with a positive slope). That is, when the density variation or its difference is calculated for a specific section, the controller 230 may control the second drying part 214 so that the amount of thermal energy in the corresponding section changes as determined by the functional relationship.

In addition or in Alternative, the density variation or its difference and the variation in the amount of thermal energy applied in response thereto may have a section-by-section correspondence. In this case, the density variation or its difference and the variation in the amount of thermal energy applied in response thereto may be determined based on a predetermined correspondence table. Here, in the correspondence table the density variation or its difference may be divided into predetermined sections in the second direction, and the amount of thermal energy applied to each section may be specified accordingly. Accordingly, when the density variation or its difference is calculated for a specific section, the controller 230 may control the second drying part 214 so that the amount of thermal energy in the corresponding section changes in accordance with the correspondence table. It is evident that the number of sections in the correspondence table is not particularly limited and can be set to any value as needed.

FIG. 8 illustrates an example of the correspondence table showing the relationship between the magnitude of density variation and variation in the thermal energy for each section of second drying part according thereto. In FIG. 8, the letters g, h, i, j, k, and l represent values indicating the difference in density variation, with the relationship -g<-h<-i<0<+j<+k<+l. The letters G, H, I, J, K, and L represent values indicating the variation in thermal energy for each section in the second drying part 214, with the relationship +G>+H>+I>0>-J>-K>-L. Here, values of letters g, h, i, j, k, and l, and values of letters G, H, I, J, K, and L may be determined based on, for example, repeated experiments, historical data, or the type and composition of the active material in the electrode active material slurry, as described above.

Referring to FIG. 8, when the difference in density variation is positive (+), the controller 230 reduces the amount of thermal energy applied by the second drying part 214 in proportion to the difference in density variation. In addition, when the difference in density variation is negative (-), the controller 230 increases the amount of thermal energy applied by the second drying part 214 in proportion to the difference in density variation.

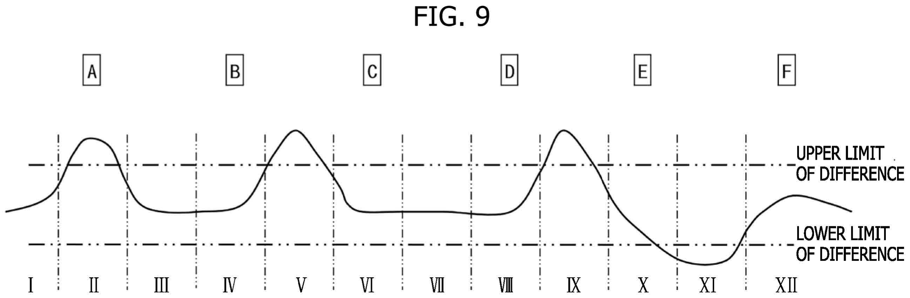

FIG. 9 is a diagram schematically illustrating an example of a method of controlling the drying parts for each section based on the difference in density variation for each section. In this example, the number of sections (12, labeled I to XII) for calculating the difference in density variation is greater than the number of thermal energy sources (6, labeled A to F) disposed in the second drying part 214. In FIG. 9, a lower limit and an upper limit of the difference represent a range of the difference in density variation for which no adjustment to the amount of thermal energy is required. That is, when the difference in density variation in the corresponding section falls between the lower limit and the upper limit of the difference, the controller 230 controls the second drying part 214 so that the amount of thermal energy applied to the corresponding section remains unchanged. However, when the difference in density variation in the corresponding section is less than the lower limit or greater than the upper limit, the controller 230 controls the second drying part 214 so that the amount of thermal energy applied to the corresponding section is increased or reduced.

Referring to FIG. 9, the difference in density variation in each of sections II, V, and IX is greater than the upper limit, and the difference in density variation in section XI is less than the lower limit. In this case, for section II, the controller 230 may control the second drying part 214 to reduce the output of a thermal energy source A, which reduces the thermal energy applied to section II. For section V, the controller 230 may control the second drying part 214 to reduce the output of thermal energy sources B and/or C, which reduces the thermal energy applied to section V. For section IX, the controller 230 may control the second drying part 214 to reduce the output of thermal energy sources D and/or E, which reduces the thermal energy applied to section IX. For section XI, the controller 230 may control the second drying part 214 to increase the output of thermal energy sources E and/or F, which increases the thermal energy applied to section XI.

Above, the case is described in which the dryer 210 includes the first drying part 212 and the second drying part 214, and the controller 230 adjusts the amount of thermal energy applied to the active material layer by controlling the second drying part 214. However, the present disclosure is not limited thereto, and the controller 230 may control the first drying part 212 to adjust the overall amount of thermal energy applied to the active material layer while also controlling the second drying part 214 to adjust the amount of thermal energy applied to the active material layer differently for each section.

Next, a method of drying electrodes according to an embodiment of the present disclosure will be described.

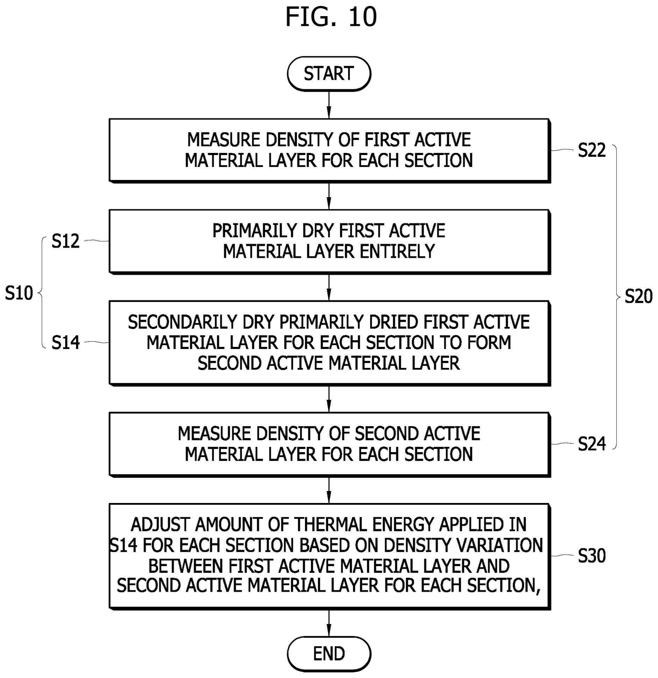

FIG. 10 is a flowchart illustrating an example of an electrode drying method according to an embodiment of the present disclosure. Hereinafter, a description will be made of the electrode drying method shown in FIG. 10 as performed using the electrode drying apparatus 200 shown in FIG. 6. Accordingly, for details that are not specifically described below in relation to the electrode drying method, those described above may be applied. However, the following description is not limited to being performed using the electrode drying apparatus 200 as in any of the embodiments described above.

Referring to FIGS. 6 and 10, first, a drying process S10 is performed to evaporate a solvent component by applying thermal energy to an electrode active material slurry (a first/fluid active material layer) coated on a substrate. As a result, the solvent component evaporates from the first active material layer, and a dried electrode active material layer (a second/dried active material layer) is formed on the substrate. According to one aspect, an amount of thermal energy applied to dry the first active material layer in the drying process S10 may be adjusted. More specifically, the amount of thermal energy applied to the first active material layer may be adjusted according to control performed in a subsequent control process S30. In particular, in the drying process S10, different amounts of thermal energy may be applied to respective sections in the width direction of the substrate (i.e., the second direction intersecting the first direction in which the substrate moves) according to the control performed in the control process S30.

According to one aspect of the present embodiment, the drying process S10 may include two or more drying operations. For example, the drying process S10 may include a first drying operation S12 of primarily drying the first active material layer formed on the substrate that enters the dryer 210, and a second drying operation S14 of further drying the first active material layer, which was primarily dried in the first drying operation S 12, to form the second active material layer. In the first drying operation S12, the first active material layer may be dried partly or entirely. In the second drying operation S14, the first active material layer, which was primarily dried, may be divided into a plurality of sections and independently dried for each section.

Next, a density measurement process S20 is performed to measure a density of each of the first active material layer and the second active material layer. The density measurement process S20 may include a first density measurement operation S22 for measuring the density of the first active material layer before performing the drying process S10 and a second density measurement operation S24 for measuring the density of the second active material layer after the completion of the drying process S10. In the first and second density measurement operations S22 and S24, a thickness of the active material layer formed on the surface of the substrate may be measured in a non-contact manner to calculate the density.

In the first density measurement operation S22 and the second density measurement operation S24, the density of the active material layer at the same position on the substrate with respect to a moving direction of the substrate (the first direction) may be measured. There may be a time interval Δt required to perform the drying process S10 between the first density measurement operation S22 and the second density measurement operation S24.

In the first density measurement operation S22 and the second density measurement operation S24, the density of the active material layer may be measured while scanning the substrate in the second direction, i.e., the width direction of the substrate, which intersects with the first direction. In this case, in each of the first density measurement operation S22 and the second density measurement operation S24 the density of the active material layer may be measured continuously in the second direction or may be measured at multiple points in the second direction at a measurement interval. Here, the measurement interval in the second direction may correspond to an interval of thermal energy sources that apply thermal energy to each section in the second drying operation S14.

Subsequently, based on a density variation, which is a difference between the density of the first active material layer and the density of the second active material layer measured in the density measurement process S20, the control process S30 is performed to adjust a magnitude of the thermal energy applied during the drying process S10. In the control process S30, measured values from each of the first density measurement operation S22 and the second density measurement operation S24 may be used to calculate the density variation .

The density variation calculated in the control process S30 may be a density variation for each section. That is, in the control process S30, the density variation may be calculated for each of the plurality of sections divided at a predetermined interval in the second direction. The number of sections for calculating the density variation in the control process S30 may correspond to the number of thermal energy sources required for performing the second drying operation S14.

In the control process S30 the amount of thermal energy applied to the active material layer during the drying process S10 may be adjusted based on the calculated density variation for each section. In this case, the drying process S10 may be controlled so that a predetermined magnitude of thermal energy corresponding to a magnitude of the density variation is applied. Alternatively, the amount of thermal energy applied to the active material layer during the drying process S10 may be adjusted based on a difference in density variation as determined by comparing the calculated density variation for each section with a predetermined reference value.

The density variation or its difference and the variation in the amount of thermal energy applied in response thereto may have a continuous correspondence. In such case, the density variation or its difference and the variation in the amount of thermal energy applied in response thereto may have a predetermined functional relationship (e.g., a linear function with a positive slope). That is, when the density variation or its difference is calculated for a specific section, the second drying operation S14 may be controlled so that the amount of thermal energy in the corresponding section changes as determined by the functional relationship.

The density variation or its difference and the variation in the amount of thermal energy applied in response thereto may have a section-by-section correspondence. In such a case, the density variation or its difference and the variation in the amount of thermal energy applied in response thereto may be determined based on a predetermined correspondence table. Here, the correspondence table is such that the density variation or its difference may be divided into predetermined sections in the second direction and the amount of thermal energy applied to each section may be specified accordingly. When the density variation or its difference is calculated for a specific section, the second drying operation S14 may be controlled so that the amount of thermal energy in the corresponding section changes as determined by the correspondence table.

According to the present disclosure, a degree of drying of an electrode active material slurry can be calculated using measured values taken before and after a drying process, and the drying process can be controlled based on the measured values to thereby improve drying uniformity.

In addition, the amount of drying of the electrode active material slurry can be calculated by dividing a substrate into a plurality of sections in a width direction, and the drying process may be controlled for each section based on this calculation, thereby improving drying uniformity in the width direction of the substrate.

Further, the drying process can be automatically controlled by adjusting the output of a thermal energy source by a predetermined magnitude corresponding to the degree of drying of the electrode active material slurry.

However, it will be appreciated by persons skilled in the art that the effects that can be achieved through the present disclosure are not limited to what has been described hereinabove and other advantages of the present disclosure will be more clearly understood from the detailed description.

Embodiments are set out in the following clauses.

Clause 1. A drying apparatus for manufacturing electrodes, the drying apparatus comprising: a dryer configured to form a dried active material layer by applying thermal energy to dry a fluid active material layer of an electrode active material slurry coated on a substrate moving in a first direction; a densitometer configured to measure a density of the fluid active material layer and the dried active material layer; and a controller configured to control the dryer such that a magnitude of the thermal energy is adjusted based on a density variation difference between a density of the fluid active material layer and a density of the dried active material layer as measured by the densitometer.

Clause 2. The drying apparatus of Clause 1, wherein the dryer includes a first drying part configured to first dry the fluid active material layer, and a second drying part configured to second dry the fluid active material layer after the first drying part, and wherein the controller is configured to control the second drying part to adjust the magnitude of the thermal energy.

Clause 3. The drying apparatus of Clause 2, wherein the first drying part is configured to dry an entirety of the fluid active material layer, and wherein the second drying part is configured to dry the fluid active material layer by dividing the fluid active material layer into regions in a second direction intersecting the first direction.

Clause 4. The drying apparatus of Clause 3, wherein the densitometer includes a first density measuring part disposed in before the dryer in the first direction and configured to measure a density of the fluid active material layer while scanning in the second direction, and a second density measuring part disposed after the dryer in the first direction and configured to measure a density of the dried active material layer while scanning in the second direction, and
wherein the density variation is a difference between the density of the fluid active material layer and the density of the dried active material layer for each section in the second direction.

Clause 5. The drying apparatus of Clause 4, wherein the second drying part includes a plurality of thermal energy sources that are arranged in the second direction and are individually controlled.

Clause 6. The drying apparatus of Clause 5, wherein the controller individually controls the thermal energy sources based on the density variation for each section in the second direction.

Clause 7. The drying apparatus of Clause 6, wherein the density variation for each section is obtained by dividing the substrate into a plurality of sections in the second direction corresponding to the number of thermal energy sources and calculating the density variation for each section.

Clause 8. The drying apparatus of Clause 7, wherein the number of sections is greater than the number of thermal energy sources.

Clause 9. The drying apparatus of Clause 7, wherein the density variation for each section is obtained by averaging the density variation for each of the sections.

Clause 10. The drying apparatus of Clause 6, wherein the controller is configured to individually control the thermal energy sources based on a variation in an output of each of the thermal energy sources to correspond to a magnitude of the density variation for each section.

Clause 11. An electrode drying method comprising: a drying operation of forming a dried active material layer by applying thermal energy to dry a fluid active material layer of an electrode active material slurry coated on a substrate moving in a first direction; a measuring operation of measuring a density of the fluid active material layer and the dried active material layer; and a control operation of adjusting a magnitude of the thermal energy that is applied in the drying operation based on a density variation that is a difference between a density of the fluid active material layer and a density of the dried active material layer.

Clause 12. The electrode drying method of Clause 11, wherein the drying operation includes a first drying operation in which the fluid active material layer is first dried, and a second drying operation in which the fluid active material layer is second dried, wherein, a magnitude of the thermal energy applied in the second drying operation is controlled, wherein in the first drying operation, an entirety of the fluid active material layer is dried, and wherein in the second drying operation, the fluid active material layer is dried by dividing the fluid active material layer into regions in a second direction intersecting the first direction.

Clause 13. The electrode drying method of Clause 12, wherein the measuring operation includes a first measuring operation of measuring a first density while scanning the fluid active material layer in the second direction before the drying operation, and a second measuring operation of measuring a second density while scanning the dried active material layer in the second direction after the drying operation, and wherein the density variation is a difference between the first density and the second density for each section in the second direction.

Clause 14. The electrode drying method of Clause 13, wherein, in the control operation, the magnitude of the thermal energy applied in the second drying operation is controlled for each region based on the density variation for each section in the second direction, and wherein the density variation for each section is obtained by averaging the density variation for each of the sections.

Clause 15. Electrode manufacturing equipment comprising: a coating apparatus configured to apply an electrode active material slurry onto a substrate to form a fluid active material layer; an electrode drying apparatus configured to dry the fluid active material layer on the substrate that moves in a first direction from the coating apparatus to form a dried active material layer; and a rolling apparatus configured to press the substrate on which the dried active material layer is formed to adhere the dried active material layer to the substrate, wherein the electrode drying apparatus includes: a dryer configured to form the dried active material layer by applying thermal energy to dry the fluid active material layer; a densitometer configured to measure a density of each of the fluid active material layer and the dried active material layer; and a controller configured to control the dryer such that a magnitude of the thermal energy is adjusted based on a density variation that is a difference between the density of the fluid active material layer and the density of the dried active material layer as measured by the densitometer.

While the present disclosure has been described with reference to the example embodiments illustrated in the accompanying drawings, it should be understood that the present disclosure is not limited to the disclosed embodiments and covers various modifications and equivalent arrangements.

## Claims

1. An electrode drying apparatus for manufacturing electrodes, the electrode drying apparatus comprising:
a dryer configured to form a dried active material layer by applying thermal energy to dry a fluid active material layer of an electrode active material slurry coated on a substrate moving in a first direction;
a densitometer configured to measure a density of the fluid active material layer and the dried active material layer; and
a controller configured to control the dryer such that a magnitude of the thermal energy is adjusted based on a density variation that is a difference between a density of the fluid active material layer and a density of the dried active material layer measured by the densitometer.

2. The electrode drying apparatus of claim 1, wherein the dryer includes a first drying part configured to first dry the fluid active material layer, and a second drying part configured to second dry the fluid active material layer after the first drying part, and
wherein the controller is configured to control the second drying part to adjust the magnitude of the thermal energy.

3. The electrode drying apparatus of claim 2, wherein the first drying part is configured to dry an entirety of the fluid active material layer, and
wherein the second drying part is configured to dry the fluid active material layer by dividing the fluid active material layer into sections in a second direction intersecting the first direction.

4. The electrode drying apparatus of claim 3, wherein the densitometer includes a first density measuring part disposed before the dryer in the first direction and configured to measure the density of the fluid active material layer while scanning in the second direction, and a second density measuring part disposed after the dryer in the first direction and configured to measure the density of the dried active material layer while scanning in the second direction, and
wherein the density variation is a difference between the density of the fluid active material layer and the density of the dried active material layer for each section in the second direction.

5. The electrode drying apparatus of claim 3 or 4, wherein the second drying part includes a plurality of thermal energy sources that are arranged in the second direction and are individually controlled.

6. The electrode drying apparatus of claim 5, when dependent on claim 4, wherein the controller is configured to individually control the thermal energy sources based on the density variation for each section in the second direction.

7. The electrode drying apparatus of claim 5 or 6, wherein the density variation for each section is obtained by dividing the substrate into a plurality of sections in the second direction corresponding to the number of thermal energy sources and calculating the density variation for each section.

8. The electrode drying apparatus of claim 5, 6 or 7, wherein the number of sections is greater than the number of thermal energy sources.

9. The electrode drying apparatus of any one of claims 4 to 7, wherein the density variation for each section is obtained by averaging the density variation for each of the sections.

10. The electrode drying apparatus of any one of claims 4 to 9, wherein the controller is configured to individually control the thermal energy sources based on a variation in an output of each of the thermal energy sources to correspond to a magnitude of the density variation for each section.

11. An electrode drying method comprising:
a drying operation of forming a dried active material layer by applying thermal energy to dry a fluid active material layer of an electrode active material slurry coated on a substrate moving in a first direction;
a measuring operation of measuring a density of the fluid active material layer and the dried active material layer; and
a control operation of adjusting a magnitude of the thermal energy that is applied in the drying operation based on a density variation that is a difference between a density of the fluid active material layer and a density of the dried active material layer.

12. The electrode drying method of claim 11, wherein the drying operation includes a first drying operation in which the fluid active material layer is first dried, and a second drying operation in which the fluid active material layer is second dried,
wherein, a magnitude of the thermal energy applied in the second drying operation is controlled,
wherein in the first drying operation, an entirety of the fluid active material layer is dried, and
wherein in the second drying operation, the fluid active material layer is dried by dividing the fluid active material layer into sections in a second direction intersecting the first direction.

13. The electrode drying method of claim 12, wherein the measuring operation includes a first measuring operation of measuring a first density while scanning the fluid active material layer in the second direction before the drying operation, and a second measuring operation of measuring a second density while scanning the dried active material layer in the second direction after the drying operation, and
wherein the density variation is a difference between the first density and the second density for each section in the second direction.

14. The electrode drying method of claim 13, wherein, in the control operation, the magnitude of the thermal energy applied in the second drying operation is controlled for each section based on the density variation for each section in the second direction, and
wherein the density variation for each section is obtained by averaging the density variation for each of the sections.

15. Electrode manufacturing equipment comprising:
a coating apparatus configured to apply an electrode active material slurry onto a substrate to form a fluid active material layer;
an electrode drying apparatus according to any one of claims 1 to 10, wherein the electrode drying apparatus is configured to dry the fluid active material layer on the substrate that moves in a first direction from the coating apparatus to form a dried active material layer; and
a rolling apparatus configured to press the substrate on which the dried active material layer is formed to adhere the dried active material layer to the substrate.
